(19) Europäisches Patentamt
European Patent Office
Office européen des brevets

(11) Veröffentlichungsnummer : **0 047 369**
**B1**

(12) **EUROPÄISCHE PATENTSCHRIFT**

(45) Veröffentlichungstag der Patentschrift : **16.11.83**

(51) Int. Cl.³ : **E 21 B 43/22**

(21) Anmeldenummer : **81105344.6**

(22) Anmeldetag : **09.07.81**

# (54) Verfahren zur Gewinnung von weitgehend emulsionsfreiem Öl aus einer unterirdischen Lagerstätte.

(30) Priorität : **10.09.80 DE 3033927**

(43) Veröffentlichungstag der Anmeldung : **17.03.82 Patentblatt 82/11**

(45) Bekanntmachung des Hinweises auf die Patenterteilung : **16.11.83 Patentblatt 83/46**

(84) Benannte Vertragsstaaten : **AT BE FR GB IT NL**

(56) Entgegenhaltungen :
**US A 3 692 113**
**US A 4 016 932**
**US A 4 110 228**

**TENSIDE DETERGENTS, Band 16, Nr. 5, 1979, MÜNCHEN (DE), D. BALZER et al. « Die Phasen-Inversions-Temperatur als Auswahlkriterium für Tenside bei der tertiären Erdölgewinnung » Seiten 256-261**

**TENSIDE DETERGENTS, Band 14, Nr. 5, September/Oktober 1977, MÜNCHEN (DE), H. STACHE et al. « Carboxymethylierte Oxäthylate als Tenside für die tertiäre Erdölgewinnung », Seiten 237-239**

**Die Akte enthält technische Angaben, die nach dem Eingang der Anmeldung eingereicht wurden und die nicht in dieser Patentschrift enthalten sind.**

(73) Patentinhaber : **CHEMISCHE WERKE HÜLS AG**
**Postfach 1320**
**D-4370 Marl 1 (DE)**

(72) Erfinder : **Balzer, Dieter, Dr.**
**Griesheimer Strasse 18**
**D-4370 Marl (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 047 369 B1

Verfahren zur Gewinnung von weitgehend emulsionsfreiem Öl aus einer unterirdischen Lagerstätte

Bei der Gewinnung von Öl aus ölführenden Lagerstätten gelingt es im allgemeinen nur, einen Bruchteil des ursprünglich vorhandenen Öls durch primäre Gewinnungsverfahren zu fördern. Hierbei gelangt das Öl infolge des natürlichen Lagerstättendrucks an die Erdoberfläche. Bei der sekundären Ölgewinnung wird Wasser in einer oder mehrere Injektionsbohrungen der Formation eingepreßt und das Öl zu einer oder mehreren Produktionsbohrungen getrieben und sodann an die Erdoberfläche gebracht. Dieses sogenannte Wasserfluten als Sekundärmaßnahme ist relativ billig und wird entsprechend häufig eingesetzt, führt jedoch in vielen Fällen nur zu einer geringen Mehrentölung der Lagerstätte.

Eine wirksame Verdrängung des Öls, die teurer, jedoch im Hinblick auf die gegenwärtige Ölverknappung volkswirtschaftlich dringend erforderlich ist, gelingt durch tertiäre Maßnahmen. Darunter sind Verfahren zu verstehen, bei denen entweder die Viskosität des Öls erniedrigt und/oder die Viskosität des nachflutenden Wassers erhöht und/oder die Grenzflächenspannung zwischen Wasser und Öl erniedrigt werden.

Die meisten dieser Prozesse lassen sich entweder als Lösungs- oder Mischungsfluten, thermische Ölgewinnungsverfahren, Tensid- oder Polymerfluten bzw. als Kombination von mehreren der genannten Verfahren einordnen.

Thermische Gewinnungsverfahren beinhalten die Injizierung von Dampf oder heißem Wasser bzw. sie erfolgen als In-situ-Verbrennung. Lösungs- oder Mischungsverfahren bestehen im Injizieren eines Lösungsmittels für das Erdöl in die Lagerstätte, wobei dies ein Gas und/oder eine Flüssigkeit sein kann. Tensidflutprozesse — je nach Tensidkonzentration, gegebenenfalls Tensidtyp und Zusätzen unterscheidet man tensidgestütztes Wasserfluten, übliches Tensidfluten (Lowtension flooding), micellares Fluten und Emulsionsfluten — beruhen in erster Linie auf einer starken Erniedrigung der Grenzflächenspannung zwischen Öl und Lagerstättenwasser. In einigen Fällen jedoch, insbesondere in Gegenwart höherer Tensidkonzentrationen, entstehen Wasser-in-Öl-Dispersionen mit, verglichen zum Öl, deutlich erhöhter Viskosität, so daß hier das Tensidfluten auch auf eine Verkleinerung des Mobilitätsverhältnisses zielt, wodurch bekanntlich der Wirkungsgrad der Ölverdrängung erhöht wird. Reines Polymerfluten beruht überwiegend auf dem zuletzt beschriebenen Effekt des günstigeren Mobilitätsverhältnisses zwischen Öl und nachflutendem Wasser.

Die vorliegende Erfindung bezieht sich auf ein Verfahren zur Gewinnung von Öl durch Tensidfluten. Als ölmobilisierende Tenside wurden bislang vor allem organische Sulfonate, wie Alkyl-, Alkylaryl- oder Petroleumsulfonate, beschrieben. Diese besitzen jedoch eine sehr niedrige Toleranzgrenze gegenüber der Salinität der Lagerstättenwässer. Bereits Salzkonzentrationen von 1 000 ppm gelten als problematisch, wobei die Empfindlichkeit dieser Tenside gegenüber Erdalkaliionen besonders ausgeprägt ist. Hier wird als obere kritische Grenzkonzentration ca. 500 ppm angenommen (US-PS 4 110 228, Spalte 2, 1. Absatz). Bei höheren Salzkonzentrationen bilden sich hier Fällungsprodukte, die zu Verstopfungen der Formation führen können. Da jedoch viele Lagerstättenwässer wesentlich höhere Salinitäten besitzen, in Norddeutschland bis zu 250 000 ppm, hat man nach Wegen gesucht, die sonst gut ölmobilisierenden Eigenschaften der organischen Sulfonate auch für höher salinare Lagerstättensysteme nutzbar zu machen. Im Gemisch mit Cosurfactants, wie Alkoholen oder nichtionischen Tensiden, zeigten sich organische Sulfonate auch weniger elektrolytempfindlich, allerdings war dann meist auch die ölmobilisierende Wirkung verschlechtert.

Im Gegensatz zu dieser Substanzgruppe zeigen Alkyl- bzw. Alkylarylpolyglykolethersulfate oder carboxymethylierte Alkyl- bzw. Alkylaryloxethylate eine gute Verträglichkeit selbst mit extrem hohen Salinitäten (bis 250 000 ppm) der Lagerstättenwässer. Da die ölmobilisierende Wirkung dieser Tenside gut ist (D. Balzer und K. Kosswig, Tenside Detergents *16*, 256 (1979), Seite 259 unter 3,2 Flutversuche, insbesondere rechte Spalte, Zeilen 5-3 von unten, sowie Seite 260, Tabelle 4), ist diese Substanzklasse geradezu prädestiniert für den Einsatz bei Ölverdrängung in mittel- und hochsalinaren (30 000 bis 250 000 ppm Gesamtsalzgehalt) Lagerstättensystemen.

Bei zahlreichen Untersuchungen an Modellformationen mit carboxymethylierten Oxethylaten als Tensiden war jedoch zu beobachten, daß das Tertiäröl überwiegend als Emulsion gefördert wurde. Da es sich hierbei um o/w-Emulsionen handelt, deren Spaltung in eine Öl- und eine Wasserphase in der Erdöltechnologie aufwendig ist, bedeutet dies einen erheblichen Nachteil des Verfahrens. Es war daher Aufgabe der vorliegenden Erfindung, ein Verfahren zu entwickeln, das es gestattet, durch carboxymethylierte Oxethylate mobilisiertes Tertiäröl weitgehend emulsionsfrei zu fördern. Diese Aufgabe wurde durch das in den Ansprüchen 1 bis 5 beschriebene Verfahren gelöst. Basis des Verfahrens ist die überraschende Feststellung, derzufolge es gelingt, das Öl dann überwiegend emulsionsfrei auszufluten, wenn der Lösung bzw. Dispersion des Tensids in Lagerstättenwasser zusätzlich lösliche Erdalkalisalze zugefügt werden. Es handelt sich dabei im allgemeinen um Formationen, deren Formationswässer einen Erdalkaliionengehalt von weniger als 3 % besitzen. Offenbar ist diese Eigenschaft substanzspezifisch für carboxymethylierte Oxethylate, denn sie wurde bei Polyglykolethersulfaten auch im Gemisch mit Oxethylaten nicht beobachtet.

Die vorliegende Erfindung bezieht sich auf den Einsatz von carboxymethylierten Oxethylaten als

ölmobilisierende Tenside. Zweckmäßigerweise stellt man diese Verbindungen nach DE-PS 24 18 444 durch Umsetzung von Oxethylaten der Formel $R-(O-CH_2-CH_2)_nOH$ mit einem Salz der Chloressigsäure in Gegenwart von Alkalihydroxid oder Erdalkalihydroxid her. Aber auch andere Herstellungsverfahren sind geeignet. R bedeutet hierbei einen gesättigten oder ungesättigten, geradkettigen oder verzweigten Alkylrest mit 4 bis 20, vorzugsweise 8 bis 16, C-Atomen oder einen Alkylarylrest mit 1 bis 14 C-Atomen im Alkylrest. n kann Werte zwischen 1 bis 30, vorzugsweise zwischen 3 und 15, annehmen. Das Kation kann Natrium, Kalium, Lithium, Ammonium, Calcium oder Magnesium sein. Entsprechend ihrer Herstellung enthalten die carboxymethylierten Oxethylate stets noch ansehnliche Mengen nicht umgesetztes Oxethylat. Die Formel $R-(O-CH_2-CH_2)_n-OCH_2-COOM$ bezeichnet daher stets ein Gemisch mit unterschiedlichen Mengen an nicht umgesetztem Oxethylat. Demgemäß läßt sich ein Carboxymethylierungsgrad definieren. Es hat sich gezeigt, daß Mischungen mit einem Carboxymethylierungsgrad zwischen 10 und 90 %, vorzugsweise zwischen 30 und 90 %, das Öl wirksam zu verdrängen vermögen. Besonders wirksam sind Mischungen mit Carboxymethylierungsgraden von 50 bis 85 %.

Die beschriebenen Mischungen aus anionischem und nichtionischem Tensid, carboxymethylierte Oxethylate genannt, sind in üblichen Lagerstättenwässern löslich oder zumindest gut dispergierbar, wobei keinerlei Ausfällungen beobachtet werden.

Erfindungsgemäß geht man nun folgendermaßen vor: Nach Feststellung der ölmobilisierenden Eigenschaften eines carboxymethylierten Oxethylates für das betreffende Lagerstättensystem durch einen Vorversuch in einer Sandschüttung als Modellformation wird das Tensid in Formationswasser gelöst oder dispergiert. Letzterem wird zuvor oder nachträglich wasserlösliches Erdalkalisalz in geeigneter Konzentration zugesetzt. Hierbei kann die Tensidkonzentration Werte zwischen 0,2 und 20 %, vorzugsweise zwischen 1 bis 10 %, betragen. Die Konzentration der Erdalkalisalze in dem als Lösemittel für das Tensid dienenden Formationswasser wird zweckmäßigerweise mit Hilfe der Phasen-Inversions-Temperatur (PIT) der Rohölemulsion bestimmt. Letztere wird hergestellt aus dem Öl und dem mit Erdalkalisalzen angereicherten Formationswasser der betreffenden Lagerstätte sowie dem ausgewählten Tensid. Das Phasenverhältnis der Emulsion Öl zu Wasser kann bei der Bestimmung der PIT 2 : 1 bis 1 : 9 betragen, zweckmäßigerweise wählt man 1 : 1. Als Tensidmenge kommen hier Konzentrationen zwischen 0,5 und 10 % infrage, zweckmäßig ist eine 1 bis 2 %ige Tensidkonzentration. Die PIT, bei der eine o/w-Emulsion in eine w/o-Emulsion umschlägt, läßt sich durch Messung der elektrischen Leitfähigkeit sehr leicht indizieren, wie an anderer Stelle bereits ausführlich dargestellt (D. Balzer und K. Kosswig, Tenside Detergents *16*, 256 ff. (1979), Seite 257, unter 2.2.1). Da bei der PIT oder zumindest in ihrer Nähe ein Minimum der Grenzflächenspannung zwischen Öl- und der Wasserphase durchlaufen wird, zeigt diese Temperatur den Bereich günstiger Ölmobilisierung durch das Tensid an. Außerdem ist bekannt, daß dann das Öl überwiegend emulsionsfrei aus Modellformationen geflutet werden kann, wenn die PIT entweder unterhalb der Lagerstättentemperatur liegt oder mit ihr übereinstimmt (D. Balzer und K. Kosswig, s.o.). Nach neueren Befunden ist dies auch dann der Fall, wenn die PIT bis zu 10 °C über der Lagerstättentemperatur liegt.

Bei erdalkaliarmen Lagerstättenwässern (weniger als 3 % Erdalkaliionen im Formationswasser) in Gegenwart von carboxymethylierten Oxethylaten nimmt nun — wie überraschenderweise gefunden wurde — die PIT durch zugesetzte Erdalkalisalze stark ab. Aufgrund dieser Beobachtung läßt sich für ein bestimmtes carboxymethyliertes Oxethylat, für das die PIT der Mischung Öl/Formationswasser/Tensid höher liegt als die Lagerstättentemperatur, durch Zugabe von Erdalkaliionen Öl optimal mobilisieren und emulsionsfrei fördern. Die nach der geschilderten Methode als zweckmäßig festgestellte Konzentration an Erdalkaliionen wird daher der Tensidlösung zugefügt und diese mit Hilfe von Injektionspumpen durch eine oder mehrere Injektionsbohrungen in die Lagerstätte eingebracht. Hierbei kann die mit Erdalkalisalzen versetzte Tensidlösung entweder kontinuierlich oder in Form eines Slugs, d. h. eines eng begrenzten Volumens von 0,05 bis 4,0 PV (= Vielfaches des Porenvolumens der Lagerstätte) eingesetzt werden. Die Größe des Slugs richtet sich vor allem nach der Konzentration der Tensidlösung und nach der Wirtschaftlichkeit.

Zweckmäßigerweise geht dem Tensidfluten ein Wasserfluten voraus, wobei als Flutflüssigkeit das produzierte Formationswasser eingesetzt wird, dem in gleich hoher Konzentration wie bei der Tensidlösung Erdalkaliionen zugefügt werden. Die Erdalkalikonzentration kann hier, verglichen zu der des Tensidslugs, auch etwas (um 5 bis 10 %) erhöht sein. Die Größe dieses Wasserslugs beträgt 0,01 bis 4 PV, vorzugsweise 0,05 bis 1, 0 PV. Dem Tensidslug nachgeschaltet injiziert man zweckmäßigerweise sowohl aus Gründen der Mobilitätskontrolle als auch zum Schutz der Tensidlösung vor eindringendem Formationswasser einen Polymer-Slug in die Lagerstätte. Hierzu wird ein Polymer oder Polymergemisch in einer solchen Konzentration in dem Formationswasser gelöst, daß die Viskosität 4- bis 6 mal so hoch ist wie die des Öls. Bei Lagerstätten mittlerer und höherer Salinität (3 bis 28 %) kommen hier insbesondere Biopolymere, wie Polysacharide oder Cellulosederivate, die in Gegenwart der erhöhten Salzkonzentrationen noch eine ausreichende Viskosität besitzen und keine Fällungen zeigen, infrage. Der Polymerlösung oder gegebenenfalls zuvor dem hier als Lösemittel dienendem Formationswasser wird die gleiche oder eine ähnliche hohe Erdalkaliionenkonzentration zugegeben wie der Tensidlösung.

Als Erdalkalisalze, welche erfindungsgemäß einzusetzen sind, kommen alle Erdalkaliverbindungen infrage, die allein oder in Wechselwirkung mit den anderen Substanzen des Verfahrens keine Fällungen oder andere Unverträglichkeiten, wie z. B. extreme Viskositätsveränderungen, verursachen. Beispiele sind : Ca-Chlorid, Mg-Chlorid, Ca-Bromid, Mg-Bromid, Ca-Nitrat, Mg-Nitrat oder auch Sr-Chlorid. Aus Gründen der Kosten und der Umweltbelastung werden Ca-Chlorid und Mg-Chlorid besonders bevorzugt. Geeignet als Zusätze bei der Tensidlösung sind auch die Erdalkalisalze der carboxymethylierten Oxethylate.

Zweckmäßigerweise schließt sich an das Injizieren der Polymerlösung normales Wasserfluten an. Dieses wird solange fortgesetzt, wie sich wirtschaftlich Öl fördern läßt.

Die nachfolgenden Beispiele sollen das erfindungsgemäße Verfahren erläutern :

Beispiel 1 (Messung der PIT)

In ein 150 ml-Doppelwandgefäß aus Glas zur Messung der elektrischen Leitfähigkeit von Flüssigkeiten wurden 50 ml eines paraffinischen Rohöls ($\delta_{20\,°C}$ : 0,863 g/cm$^3$, $\eta_{20\,°C}$ 10 mPas) sowie 50 ml 20 %ige Kochsalzlösung, in der 1 g carboxymethyliertes Nonylphenoloxethylat mit 5,3 Molen Ethylenoxid/Mol dispergiert waren, eingefüllt. Sodann wurde die Mischung kurzzeitig einem hochtourigen Rührwerk ausgesetzt und die gebildete Rohölemulsion durch weiteres Rühren mit einem üblichen Magnetrührer vor dem Brechen bewahrt. Zur Messung der elektrischen Leitfähigkeit wurde das Leitfähigkeitsmeßgerät LF 42 WTW mit Temperaturkompensation verwendet. Die Leitfähigkeit wurde in Abhängigkeit der Temperatur gemessen. Bei 20 °C betrug sie für die Emulsion ca. $4 \cdot 10^4$ µs. Beim allmählichen Erwärmen durch einen Thermostaten kombiniert mit einem Temperaturprogrammgeber auf 100 °C stieg sie auf ca. $6 \cdot 10^4$ µS. Fügt man hingegen der wäßrigen NaCl-Lösung 40 mg $CaCl_2$ hinzu, so wird bei 83 ± 1 °C eine Phaseninversion beobachtet, wobei sich die elektrische Leitfähigkeit sprunghaft von ca. $5 \cdot 10^4$ µS auf Werte < 1µS ändert. Wird die Emulsion wieder abgekühlt, so nimmt die Leitfähigkeit bei 83 °C sprunghaft den umgekehrten Verlauf. Man nennt diese Temperatur die Phasen-Inversions-Temperatur. Erhöht man die Calciumionenkonzentration, so wird die PIT erniedrigt. Sehr ähnliche Effekte werden auch durch die Zugabe von Magnesiumsalzen (Abbildung) und Strontiumsalzen beobachtet.

Beispiel 2 (Vergleichsbeispiel)

Zur Herstellung einer künstlichen Formation wird ein thermostatisierbares Hochdruckrohr von 70 cm Länge und 5 cm Durchmesser versehen mit Temperaturmeßeinrichtung und Manometer, beidseitig verschließbar durch Gewindeverschlüsse mit Kapillareingang und Druckhalteventilausgang mit kantengerundetem Quarzsand beschickt. Sodann wird die Sandschüttung mittels einer Hochdruckpumpe mit Formationswasser gesättigt und durch einen Thermostaten die gewünschte Temperatur eingestellt. Es folgen die Permeabilitätsmessung und anschließend die Rohölsättigung mit dem paraffinischen Rohöl, wobei gleichzeitig der Haftwassergehalt bestimmt wird.

Nunmehr setzt das Wasserfluten mit einer Flutgeschwindigkeit von ca. 4 m/d ein. Nach Einfluten von ca. 1,5 PV Formationswasser, wobei ein Verwässerungsgrad von 98 bis 100 % erzielt wird, wird eine 2 %ige Lösung von carboxymethyliertem Nonylphenoloxethylat mit 5,4 Molen Ethylenoxid pro Mol (70 % Carboxylat, 22 % Oxethylat, 8 % Kochsalz) solange injiziert, bis der Verwässerungsgrad nach dem Fördern der Ölbank längere Zeit ca. 100 % beträgt. Die Flutgeschwindigkeit beträgt hierbei ca. 1,5 m/d. Die Versuchstemperatur beträgt 55 °C, der Druck ca. 60 bar. Das Lösemittel für das Tensid in diesem und allen folgenden Beispielen war ein synthetisches Formationswasser. Es bestand aus 10 % NaCl, 0,5 % KCl, 0,1 % $MgCl_2$, 0,2 % $CaCl_2$ und 0,05 % $SrCl_2$. Die PIT der entsprechenden Emulsion aus Öl, Formationswasser und Tensidlösung bei einem Phasenverhältnis 1 : 1 betrug 85 °C und lag damit deutlich oberhalb der Formationstemperatur. Die Porosität der Sandschüttung betrug 53 %, die Permeabilität 5,2 D, der Restwassergehalt ca. 20 %. Durch Wasserfluten wurde eine Entölung von 72 % erzielt, mit Hilfe der Tensidlösung ließ sich sodann die Gesamtentölung auf 93 % steigern, wobei allerdings das Tertiäröl ausschließlich als o/w-Emulsion gewonnen wurde.

Beispiel 3 (erfindungsgemäß)

Bei praktisch identischen Bedingungen wie im Beispiel 2, jedoch mit einem Formationswasser, das zusätzlich 1,3 % $CaCl_2$ enthielt, wurde dieser Versuch wiederholt. Die PIT betrug hier nur 46 °C und lag damit etwas unterhalb der Temperatur der künstlichen Formation. Ihre Porosität betrug 53 %, ihre Permeabilität 6,5 D, der Haftwassergehalt ca. 20 %. Durch Wasserfluten der Formation wurden 80 % des Rohöls freigesetzt, durch Tensidfluten weitere 17 %, und zwar emulsionsfrei. Erst nachdem 97 % des Öls gefördert waren, brach das Tensid durch.

Beispiel 4 (erfindungsgemäß)

Bei sehr ähnlichen Bedingungen wie in Beispiel 2, jedoch mit einem Formationswasser, das zusätzlich 0,8 % $CaCl_2$ enthielt, und an einer fester gepackten Sandschüttung wurde dieser Flutversuch durchgeführt. Die PIT betrug 49 °C, die Porosität 47 %, die Permeabilität 1,8 D und der Haftwassergehalt ca. 23 %. Durch Wasserfluten wurden 76 % des Rohöls und durch das sich

anschließende Tensidfluten weitere 22 % emulsionsfrei gefördert, bevor der Tensiddurchbruch erfolgte.

Beispiel 5 (Vergleichsbeispiel)

Unter praktisch gleichen Bedingungen, jedoch an einer enger gepackten künstlichen Formation, wurde Beispiel 2 (Vergleichsbeispiel) wiederholt. Die Porosität betrug 47 %, die Permeabilität 1,8 D, der Haftwassergehalt ca. 22 %. Durch Fluten mit Formationswasser wurden 75 % des Öls freigesetzt und durch anschließendes Tensidfluten weitere 19 %, jedoch ausschließlich als o/w-Emulsion.

Beispiel 6 (erfindungsgemäß)

Unter sehr ähnlichen Bedingungen wie im Beispiel 5, jedoch bei Zusatz von 4,9 % $MgCl_2$ zum Formationswasser wurde dieser Versuch durchgeführt. Die PIT betrug 48 °C und liegt damit unter der Formationstemperatur. Die Porosität betrug 47 %, die Permeabilität 1,1 D, der Haftwassergehalt 26 %. Durch Wasserfluten wurden 74 % des Öls freigesetzt, durch Tensidfluten weitere 24 % bevor der Tensiddurchbruch erfolgt und weiteres Öl als Emulsion gefördert wird.

**Ansprüche**

1. Verfahren zur Gewinnung von weitgehend emulsionsfreiem Öl aus einer unterirdischen Lagerstätte, deren Formationswasser bei mittlerer oder hoher Gesamtsalinität relativ arm an Erdalkaliionen ist, durch Einpressen einer 1 bis 20 %igen wäßrigen Lösung oder Dispersion in Formationswasser von carboxymethylierten Oxethylaten der Formel

$$R{-}(OCH_2CH_2)_n{-}OCH_2{-}COOM$$

in der

R einen linearen oder verzweigten aliphatischen Rest mit 4 bis 20 Kohlenstoffatomen oder einen alkylaromatischen Rest mit 1 bis 14 Kohlenstoffatomen in der Alkylgruppe, n Werte zwischen 1 bis 30 annimmt und M ein Alkali- oder Erdalkali-Metallion oder Ammonium bedeutet, in eine Injektionsbohrung, dadurch gekennzeichnet, daß der Tensidlösung Erdalkaliionen in solcher Konzentration zugegeben werden, daß die Phasen-Inversions-Temperatur des Systems Rohöl/Formationswasser/Tensidlösung höchstens 10 °C oberhalb der Lagerstättentemperatur liegt.

2. Verfahren nach Anspruch 1, dadurch gekennzeichnet, daß das Formationswasser 0,05 bis 0,4 PV, welches Erdalkaliionen in gleicher oder etwas höherer Konzentration wie die Tensidlösung enthält, als Vorspülflüssigkeit vor der Tensidlösung eingepreßt wird.

3. Verfahren nach den Ansprüchen 1 und 2, dadurch gekennzeichnet, daß das Formationswasser, welches Erdalkaliionen in gleicher oder etwas höherer Konzentration wie die Tensidlösung enthält, als Nachspülflüssigkeit nach der Tensidlösung eingepreßt wird.

4. Verfahren nach Anspruch 3, dadurch gekennzeichnet, daß die wäßrige Lösung ein viskositätserhöhendes Polymer enthält.

5. Verfahren nach den Ansprüchen 1 bis 4, dadurch gekennzeichnet, daß n Werte zwischen 3 und 15 annimmt.

**Claims**

1. A process for recovering largely emulsion-free oil from an underground deposit whose formation water is relatively low in alkaline earth metal ions but of medium or high total salinity, by forcing into an injection bore a 1 to 20 % aqueous solution or dispersion in formation water of a carboxymethylated oxyethylate surfactant of the formula

$$R{-}(OCH_2CH_2)_n{-}OCH_2{-}COOM$$

where

R is a linear or branched aliphatic radical of 4 to 20 carbon atoms or an alkylaromatic radical of 1 to 14 carbon atoms in the alkyl moiety, n is from 1 to 30 and M is an alkali metal, alkaline earth metal or ammonium ion, characterised in that alkaline earth metal ions are added to the aqueous surfactant in such an amount that the phase inversion temperature of the crude oil/formation water/aqueous surfactant system is at most 10 °C above the temperature of the deposit.

2. A process according to claim 1, characterised in that 0.05 to 0.4 pore volume of formation water which contains alkaline earth metal ions in a concentration similar to or somewhat higher than the aqueous surfactant is forced into the deposit as a pre-flushing liquid before the aqueous surfactant.

3. A process according to claim 1 or 2, characterised in that formation water which contains alkaline earth metal ions in concentration similar to or somewhat higher than the aqueous surfactant is forced into the deposit as a post-flushing liquid after the aqueous surfactant.

4. A process according to claim 3, characterized in that the aqueous solution contains a viscosity-enhancing polymer.

5. A process according to any of claims 1 to 4, characterised in that n is from 3 to 15.

**Revendications**

1. Procédé pour extraire du pétrole largement exempt d'émulsion d'un gisement souterrain dont l'eau de formation, ayant une salinité totale moyenne ou élevée, est relativement pauvre en ions alcalino-terreux, par injection, dans un puits d'injection, d'une solution aqueuse ou d'une dispersion, dans l'eau de formation, à 1-20 % de produits d'oxéthylation carboxyméthylés de la formule

$R—(OCH_2CH_2)_n—OCH_2—COOM$

dans laquelle

R représente un radical aliphatique linéaire ou ramifié contenant de 4 à 20 atomes de carbone ou un radical alkyl-aromatique contenant de 1 à 14 atomes de carbone dans le groupe alkyle, n prend des valeurs comprises entre 1 et 30 et M représente un ion de métal alcalin ou alcalino-terreux, ou un ion ammonium, caractérisé par le fait que l'on ajoute, à la solution de surfactif, des ions alcalino-terreux à une concentration telle que la température d'inversion de phases du système pétrole brut/eau de formation/solution de surfactif soit au maximum supérieure de 10 °C à la température du gisement.

2. Procédé selon la revendication 1, caractérisé par le fait qu'avant la solution de surfactif, on injecte, comme liquide de lavage préalable, de 0,05 à 0,4 PV d'eau de formation qui contient des ions alcalino-terreux à une concentration égale ou quelque peu supérieure à celle de la solution de surfactif.

3. Procédé selon les revendications 1 et 2, caractérisé par le fait qu'après la solution de surfactif, on injecte, comme liquide de lavage complémentaire, l'eau de formation qui contient des ions alcalino-terreux à une concentration égale ou quelque peu supérieure à celle de la solution de surfactif.

4. Procédé selon la revendication 3, caractérisé par le fait que la solution aqueuse contient un polymère élevant la viscosité.

5. Procédé selon les revendications 1 à 4, caractérisé par le fait que n prend des valeurs comprises entre 3 et 15.

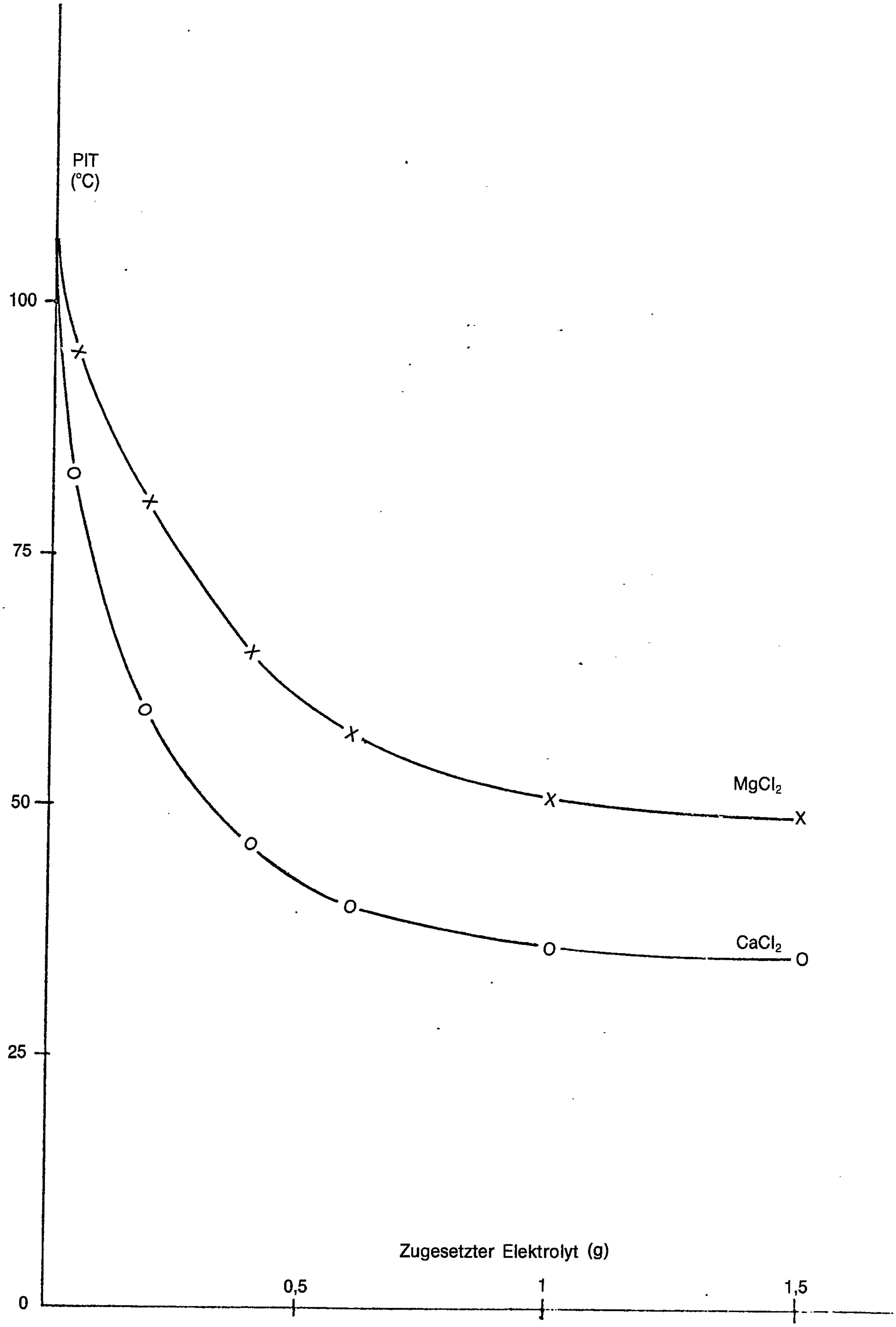
PIT
(°C)
100
75
50
25
0
MgCl2
CaCl2
Zugesetzter Elektrolyt (g)
0,5
1
1,5